# EUROPÄISCHE PATENTSCHRIFT

(11) **EP 0 548 462 B1**
(45) Veröffentlichungstag und Bekanntmachung des Hinweises auf die Patenterteilung: **14.06.1995**
(21) Anmeldenummer: 92113866.5
(22) Anmeldetag: 14.08.1992
(51) Int. Cl.: G01G 21/28

(54) **Analysenwaage mit Windschutz**
Analytical balance with wind protection
Balance d'analyse avec une protection contre le vent

(30) Priorität: 17.12.1991 CH 3732/91
(43) Veröffentlichungstag der Anmeldung: 30.06.1993
(73) Patentinhaber: Mettler-Toledo AG, 8606 Greifensee (CH)
(72) Erfinder: Lüchinger, Paul, CH-8610 Uster (CH); Fringeli, Eduard, CH-8608 Bubikon (CH)

(56) Entgegenhaltungen:
- DE-A- 3 741 313
- DE-C- 3 508 873
- DE-U- 9 004 029
- DE-U1-8 803 709

## Beschreibung

Gegenstand der vorliegenden Erfindung ist eine Analysenwaage mit mindestens einer zum Beschicken der Waagschale längs einer im Waagengehäuse vorgesehenen Führungsbahn verschiebbaren Seitenwand und einer den Wägeraum oben abschliessenden Abdeckung.

Zur Verhinderung von Messfehlern infolge Luftbewegungen im Raum während des Wägens ist es bekannt, über der Waagschale einen Windschutz anzubringen, der zum Auflegen des Wägegutes geöffnet werden kann. Ein solcher Windschutz ist beispielsweise aus der DE-A1-37 41 313.9 bekannt. Dieser Windschutz besteht aus zwei zylinderförmig gebogenen Wandelementen. Oben sind die Wandelemente durch entsprechende kreisausschnittförmige, eine Deckfläche bildende Segmente geschlossen. Die Wandelemente, welche unterschiedliche Durchmesser aufweisen, sind in kreisförmigen Führungen am Boden des Waagengehäuses um ihre Längsachse drehbar gelagert. Zum Beschicken der Waage wird eines der beiden Elemente ganz oder teilweise über oder in das andere verdreht. Zur vollständigen Verhinderung von Luftbewegungen innerhalb des Windschutzes sind zudem entlang der Kanten mindestens eines der beiden Elemente Dichtungslippen angebracht, welche auf dem anderen Element anliegen.

Dieser bekannte Windschutz ist mit mancherlei Nachteilen behaftet und erschwert ein müheloses Arbeiten an der Waage. Die unvermeidbaren Spiegelungen an den zylindrisch gebogenen Glasflächen stören eine uneingeschränkte Einsicht auf das Wägegut. Die gegenseitige Verdrehung der beiden Elemente kann grösseren Kraftaufwand erfordern, da die Dichtungsflächen jeder Verschiebung einen Widerstand entgegensetzen. Durch die in Laborräumen häufig auftretenden Dämpfe und dgl. können die Dichtungen innert kurzer Zeit unwirksam werden, bei jedem Öffnen des Wägeraumes die Oberflächen der Gläser verschmieren und die Durchsicht weiter behindern. Die mit den Wandelementen verbundenen Deckflächen geben den Wägeraum nur in geringem Masse von oben frei, und es ist zudem nicht möglich, nur die Deckfläche allein zu öffnen, ohne gleichzeitig eines der beiden Wandelemente zur Seite zu schieben. Ein weiterer sehr wesentlicher Nachteil besteht darin, dass gebogene Gläser aufwendig in der Herstellung und daher teuer sind.

In der DE-U1-88 03 709 wird ein Windschutz offenbart, der aus zwei spiegelgleichen, um eine senkrechte Achse schwenkbaren Halbschalen besteht, welche eine mehreckige Form aufweisen. Die Halbschalen sind mit einer pneumatischen Steuerung automatisch verschwenkbar, um einen Roboterbetrieb zu ermöglichen.

Es sind auch Windschutzvorrichtungen mit planen Wänden bekannt (DE-C1-35 08 873), bei denen sowohl die Seitenwände als auch der Deckenabschnitt nach hinten verschiebbar auf Schienen angeordnet sind. Das nach hinten geschobene Seitenteil überragt die Waage an deren Rückseite und zwingt den Benutzer, hinter der Waage stets Raum freizulassen. Im weiteren ist eine einwandfreie Führung solcher planer, im Verhältnis zur führenden Auflagefläche hohen Seitenwände nur mit grossem technischem Aufwand zu bewerkstelligen, wenn eine Verkantung in den Führungsschienen verhindert werden soll.

Die Aufgabe der vorliegenden Erfindung besteht darin, eine Analysenwaage der genannten Gattung so zu verbessern, dass trotz vereinfachter Herstellung eine ausgezeichnete Einsicht auf das Wägegut und eine einfache Handhabung gewährleistet sind.

Gelöst wird diese Aufgabe dadurch, daß die mindestens eine Seitenwand aus mindestens zwei entlang einer Kante aneinander angrenzenden, wenigstens annähernd planen Wandabschnitten zusammengesetzt ist, welche einen stumpfen Winkel miteinander einschliessen und unten und oben durch einen Führungsrahmen gehalten und in der Führungsbahn geführt sind, wobei die Führungsbahn bogenförmig ausgebildet ist.

Die Aufteilung der seitlichen Wandabschnitte in mindestens zwei plane, vorzugs- aber nicht notwendigerweise identische Teilflächen, welche auf einer gebogenen Bahn am Waagengehäuse geführt sind, ermöglicht nicht nur den Bau einer Waage mit sehr kleiner, auf ein Minimum beschränkter Grundfläche, sondern auch eine kostengünstige Fabrikation.

Die linienförmige Berührung der Wandabschnitte mit der Frontwand und der Rückwand bei vollständig geschlossener Seitenwand erlauben eine einwandfreie Abdichtung des Wägeraumes bezüglich Staub und Luftströmungen im Aufstellungsraum der Waage. Die bogenförmige Ausbildung der Führungsbahnen ermöglicht es weiter, die Wandabschnitte entsprechen ihrer Geometrie im Gehäuse zu führen und auf kleinem Raum im Bereich der Rückwand zu stauen. Eine Zwischenwand kann die zurückgeschobenen Seitenwände während der Beschickung vor Verschmutzung schützen, z.B. durch Flüssigkeitsspritzer, oder durch Berührung mit dem Dosierlöffel.

Bei der Verwendung von Zapfen als Führungselemente können die Seitenwände auf beliebig gestalteten Kurven mit konstantem oder veränderlichem Radius geführt werden. Beim Einsatz von Kugeln oder Rollen als Lagerelemente der Wandabschnitte, lassen sich letztere annähernd reibungsfrei verschieben, und es ist zudem möglich, die Wandabschnitte mit leistungsschwachen Kleinstmotoren, die wenig das Wägeergebnis störende Wärme entwickeln, zu verschieben.

Bei Seitenwänden, die aus mehr als zwei Wandabschnitten zusammengesetzt sind, können diese aus unterschiedlich dimensionierten Gläsern bestehen und zudem unterschiedlich grosse Winkel zueinander einnehmen. Dies ermöglicht einerseits eine den Bedürfnissen angepasste Gestaltung des Grundrisses des Wägeraumes und anderseits einen geringen Bedarf an Stauraum bei geöffneten Seitenwänden.

Anhand eines illustrierten Ausführungsbeispieles wird die Erfindung näher erläutert. Es zeigen:
- Figur 1: eine perspektivische Darstellung der Analysenwaage,
- Figur 2: einen Querschnitt durch die Waage,
- Figur 3: einen Längsschnitt durch die Waage im Bereich der Seitenwand längs Linie IV-IV in Fig. 2,
- Figur 4: einen Längsschnitt einer weiteren Ausgestaltung der Erfindung durch die Waage im Bereich der Seitenwand,
- Figur 5: einen Längsschnitt einer weiteren Ausgestaltung der Erfindung durch die Waage im Bereich der Seitenwand,
- Fig 6/7: je eine rein schematische Darstellung des Verlaufs einer weiteren Ausgestaltung der Führungsbahnen und der Gestalt der Seitenwände.

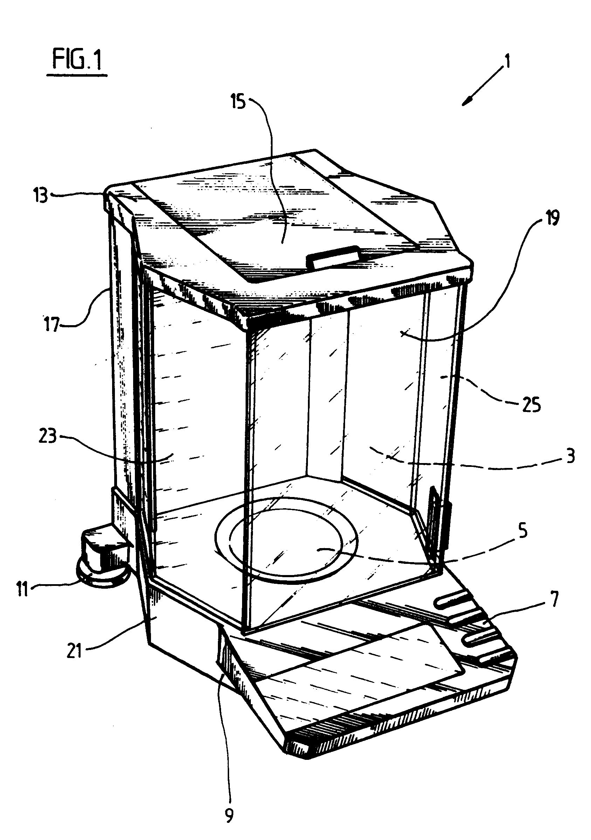

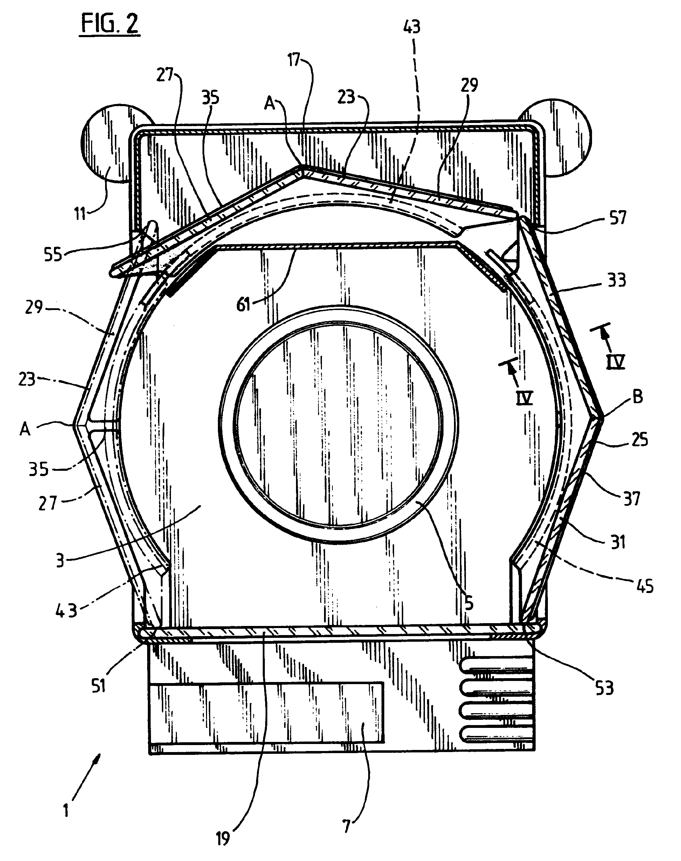

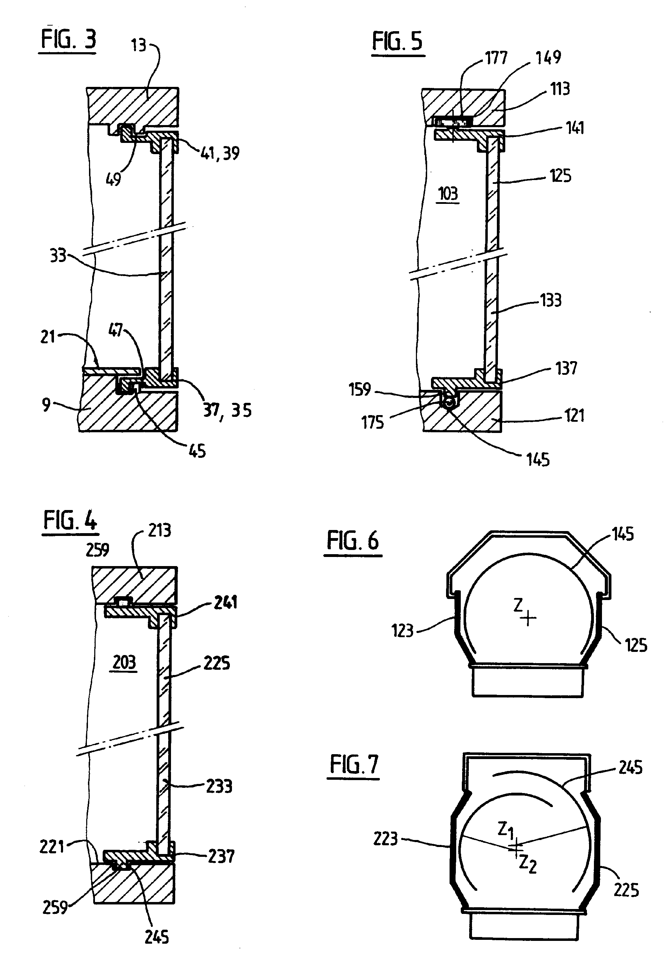

Die in Figur 1 dargestellte Waage 1 weist einen Wägeraum 3 mit im wesentlichen polygonartigem Querschnitt auf. Im Zentrum ist die Waagschale 5 angeordnet. Auf der Vorderseite der Waage 1 ist ein geneigt zur Horizontalen angebrachtes Bedienungs- und Tastaturfeld 7 sichtbar. Unterhalb des Wägeraumes 3 sind im Gehäuse 9 die elektronischen und die mechanischen Wägeelemente untergebracht. Die Waage 1 steht auf drei Füssen 11, von denen nur ein einziger sichtbar ist. Der Wägeraum 3 ist oben durch eine Abdeckung 13 verschlossen. In der Abdeckung 13 kann ein Deckel 15 vorgesehen sein, der zur Beschickung der Waage 1 von oben geöffnet und zum Wägen wieder verschlossen werden kann. Die Rückseite der Waage 1 wird durch eine Rückwand 17 gebildet, die die Abdeckung 13 trägt. Auf der Vorderseite wird der Wägeraum 3 begrenzt durch eine Frontscheibe 19, die unten am Gehäuse 9 und oben an der Abdeckung 13 befestigt ist. Seitlich wird der Wägeraum 3 durch je eine sowohl am Gehäuseboden 21, als auch an der Unterseite der Abdeckung 13 geführte Seitenwand 23,25 abgeschlossen. Die beiden Seitenwände 23,25 bestehen aus zwei oder mehr Wandabschnitten 27,29; 31,33, die stumpfwinklig entlang der vertikalen Kanten an den Stellen A,B (Scheitel) aneinanderstossen (vgl. Figur 2). Die Wandabschnitte 27 und 29 werden an ihrer Unterkante von einem Führungsrahmen 35, und die beiden Wandabschnitte 31 und 33 von einem Führungsrahmen 37 getragen. Analog dazu sind die Oberkanten der Wandabschnitte 27 und 29 in einem gemeinsamen Rahmen 39 und die Wandabschnitte 31,33 in einem Rahmen 41 gehalten (vgl. Figur 3).

Im Gehäuseboden 21 sind kreisbogenförmige Führungsbahnen 43 und 45 angebracht, welche beispielsweise die Gestalt einer vom Boden nach oben abstehenden Schiene aufweisen (Figur 3). Anstelle einer aus dem Boden 21 abstehenden Schiene oder Rippe 45 kann selbstverständlich eine in den Boden 21 eingefräste Nut 245 treten (Figur 4). Analog dazu sind dann an den Führungsrahmen 235,237 und den Rahmen 239,241 entsprechend ausgebildete Nuten 245 (Figur 4) eingelassen bzw. Rippen 259 aufgesetzt.

Anstelle von Gleitführungen gemäss den Figuren 3 und 4 können auch Kugel- oder Rollenführungen vorgesehen sein. Im Gehäuseboden 121 in Figur 5 sind, im Vergleich zur Ausführung gemäss Figur 4, tiefere Führungsbahnen 145 eingelassen, deren Grund zudem eben, V-förmig oder bogenförmig ausgebildet sein kann. In die Führungsbahnen 145 sind eine Anzahl von Kugeln 175 lose oder in Käfigen (keine Abbildung) eingelegt, die den Führungsrahmen 137 tragen. Am oberen Rahmen 141 können zudem Führungsrollen 177 mit vertikal liegender Drehachse aufgesetzt sein, welche die Seitenwand 125 in einer Nut 149 seitlich führen.

Die Vorderkante 51 des Wandabschnittes 27 und die Vorderkante 53 des Wandabschnittes 31 liegen in Figur 2 linienförmig an der Rückseite der Scheibe 19 an, wenn die Seitenwände 23 bzw. 25 vollständig nach vorne geschoben sind und damit der Wägeraum 3 verschlossen ist. In dieser geschlossenen Stellung liegen auch die Wandabschnitte 29 bzw. 33 an der Rückwand 17 an, wobei die vordere Begrenzungskante 55 der Rückwand 17 linienförmig mit der Aussenseite des Wandabschnittes 29 und die Begrenzungskante 57 linienförmig mit der Aussenseite des Wandabschnittes 33 in Anlage gelangen. Der Wägeraum 3 wird somit staub- und winddicht verschlossen. Dichtungslippen oder Bürsten sind nicht nötig.

Die beiden Führungsbahnen 43,45 können als Kreisabschnitte ausgebildet sein und einen gemeinsamen Mittelpunkt Z (Fig. 2,6) oder versetzt angeordnete Mittelpunkte Z1, Z2 (Fig. 7) aufweisen. Es ist auch möglich, die Führungsbahnen 43,45 mit unterschiedlichen Radien und/oder veränderlichen Radien zu wählen. In beiden Ausführungsformen verlaufen die Führungsbahnen 43,45 in den Bereich der Rückwand 17 hinein. Bei gleichem Radius und gleichem Zentrum Z kann eine einzige, im wesentlichen von der Frontscheibe 19 zur Rückwand 17 und von dort wieder zur Frontscheibe 19 verlaufende Führungsbahn 145 (Fig. 2,6) ausgebildet sein. Bei ungleichem Radius und/oder Mittelpunkt Z1,Z2 und/oder Kurvenverlauf laufen im Bereich der Rückwand 17 die beiden Führungsbahnen 245 (Fig. 7) nebeneinander.
Die Wandabschnitte 27,29; 31,33 sind beispielsweise in nutförmigen Ausnehmungen an den Führungsrahmen 35,37 und den Rahmen 39,41 eingeklebt (vgl. Figur 3).

Im folgenden wird die Funktionsweise der Verschiebung der Seitenwände 23,25 anhand der Figuren 1 und 2 erläutert. Bei geschlossenem Wägeraum 3 liegen die Seitenwände 23,25 mit ihren Kanten 51,53 und 55,57 dichtend an der Frontscheibe 19 und an der Rückwand 17 an. Zum Öffnen beispielsweise der Seitenwand 25 wird diese von Hand oder, falls vorhanden, durch einen elektrischen Antrieb im Gehäuse 9 entlang der Führungsbahn 45 nach hinten in die Rückwand 17 hineingeschoben. Dabei entfernt sich die an der Begrenzungskante 57 der Rückwand 17 anliegende Fläche des Wandabschnittes 33 Richtung Zentrum Z von der Rückwand 17, weil der mittlere Bereich der Seitenwand 25 näher an der Drehachse Z liegt als sämtliche übrigen vertikalen Kanten der beiden Wandabschnitte 31 und 33. Der Winkel zwischen den beiden Wandabschnitten 31 und 33 bzw. 27 und 29 ist stumpf und so bemessen, dass deren Verbindungsstellen B bzw. A ungehindert an der Begrenzungskante 57,55 vorbeigleiten können. Wird nur die Seitenwand 25 verschoben, so kann diese im wesentlichen vollständig vor die Rückwand 17 geführt werden. Werden allerdings beide Seitenwände 23 und 25 nach hinten verschoben, so berühren sich deren Hinterkanten, und es kann nicht der gesamte seitliche Bereich des Wägeraumes 3 geöffnet werden.
Wenn anstelle einer als Rippe ausgeführten Führungsbahn im Gehäuseboden 221 eine Führungsnut 243 tritt und anstelle einer Nut im Führungsrahmen 237 zwei auf der Unterseite des Führungsrahmens 237 herausragende Führungsbolzen 259 treten, können die Führungsbahnen 245 auch eine andere als kreisförmige Gestalt aufweisen (Figur 4). Die beiden Führungszapfen 259 sind in dieser Ausgestaltung der Erfindung unten vorzugsweise im Bereich der vorderen Kanten 51,53 und der hinteren Kanten 55,57 angeordnet. Oben kann ein einziger Zapfen 259 im mittleren Bereich des Rahmens 241 genügen. Selbstverständlich kann oben anstelle eines Zapfens auch eine Rolle 117 gemäss Figur 5 treten. Diese Ausgestaltung der Führung kann selbstverständlich auch bei einer Ausführung mit kreisförmigen Führungsbahnen eingesetzt werden.

Vor der U-förmig gebogenen Rückwand 17 kann im Innern des Wägeraumes 3 eine Zwischenwand 61 mit dem Gehäuseboden 21 verbunden angeordnet sein. Die Seitenwände 23,25 werden durch diese Abschlusswand 61 geschützt, wenn sie beim Beschicken der Waage 1 nach hinten verschoben sind. Bei der Beschickung und bei geschlossenen Seitenwänden ist die Gefahr einer Verschmutzung wesentlich geringer.

## Patentansprüche

1. Analysenwaage mit mindestens einer zum Beschicken der Waagschale längs einer im Waagengehäuse vorgesehenen Führungsbahn verschiebbaren Seitenwand und einer den Wägeraum oben abschliessenden Abdeckung, dadurch gekennzeichnet, dass die mindestens eine Seitenwand (23,25;123,125;223,225) aus mindestens zwei entlang einer Kante (A,B) aneinander angrenzenden, wenigstens annähernd planen Wandabschnitten (27,29,31,33;127,129,131,133;227,229,231,233) zusammengesetzt ist, welche einen stumpfen Winkel miteinander einschliessen, unten und oben durch einen Führungsrahmen (35,37,39,41;135,137,139,141;235,237, 239,241) gehalten und in der Führungsbahn (43,45;143,145;243,245) geführt sind, wobei die Führungsbahn (43,45,143,145;243,245) bogenförmig ausgebildet ist.

2. Analysenwaage nach Anspruch 1, dadurch gekennzeichnet, dass wenigstens eine Seitenwand (23,25;123,125;223,225) bei geschlossenem Wägeraum (3,103,203) vorne linienförmig dicht an einer Frontwand (11,219) und hinten an einer den Wägeraum (3,103,203) rückseitig abschliessenden Rückwand (17) anliegt.

3. Analysenwaage nach Anspruch 2, dadurch gekennzeichnet, dass bei geschlossenem Wägeraum (3;103;203) die vorderen Wandabschnitte (29,31;129,131;229,231) stirnseitig an der Rückseite der Frontwand (19,219) und die hinteren Wandabschnitte (29,33;229,233) mit ihren Aussenflächen an einer Begrenzungskante (55,57) der Rückwand (17) anliegen.

4. Analysenwaage nach einem der Ansprüche 1,2 oder 3, dadurch gekennzeichnet, dass an den Führungsrahmen (35,37) eine kreisbogenförmige Nut (47) oder eine kreisbogenförmige Rippe (245) und am Gehäuseboden (21;221) eine kreisbogenförmige Führungsbahn (45;143,145) in Gestalt einer Rippe (45) bzw. einer Nut (245) angeformt sind.

5. Analysenwaage nach einem der Ansprüche 1, 2 oder 3, dadurch gekennzeichnet, dass am Führungsrahmen (235,237) mindestens zwei Führungszapfen (259) und im Gehäuseboden (221) eine bogenförmige Führungsbahn (245) angebracht sind.

6. Analysenwaage nach einem der Ansprüche 1, 2 oder 3, dadurch gekennzeichnet, dass am Führungsrahmen (135,137) eine Rippe (159) und im Gehäuseboden (121) eine Nut (145) mit ebenem, gebogenem oder V-förmig ausgebildetem Grund eingelassen ist, und dass in der Nut (145) lose Kugeln (175) oder ein Kugelkäfig eingelegt sind.

7. Analysenwaage nach einem der Ansprüche 4 bis 6, dadurch gekennzeichnet, dass am Führungsrahmen (141) mindestens eine Führungsrolle (177) mit vertikaler Drehachse angebracht und in einer Nut (149) an der Abdeckung (113) geführt ist.

8. Analysenwaage nach einem der Ansprüche 1 bis 7, dadurch gekennzeichnet, dass wenigstens eine Seitenwand (23,25;123,125;223,225) aus gleich oder ungleich ausgebildeten rechteckigen, aus Glas oder Kunststoff bestehenden Wandabschnitten (27,29,31,33;227,229,231,233) zusammengesetzt ist.

9. Analysenwaage nach Anspruch 8, dadurch gekennzeichnet, dass die stumpfen Winkel zwischen den Seitenwänden (23,25;123,125;224,225) gleich oder ungleich sind.

10. Analysenwaage nach einem der Ansprüche 1 bis 9, dadurch gekennzeichnet, dass der Wägeraum (3;103;203) rückseitig durch eine Zwischenwand (61) begrenzt ist, welche dazu bestimmt ist, wenigstens eine zurückgeschobene Seitenwand (23,25;123,125:223,225) bezüglich des Wägeraumes (3;103;203) abzudecken.

## Claims

1. An analytical balance with at least one side wall displaceable along a guide track provided in the balance housing, for loading the weighing pan, and a cover which closes off the weighing space at the top, characterised in that the at least one side wall (23, 25; 123, 125; 223, 225) is made up of at least two at least approximately flat wall portions (27, 29, 31, 33; 127, 129, 131, 133; 227, 229, 231, 233) which adjoin along an edge (A, B) and which include an obtuse angle with each other and which are held at top and bottom by a guide frame (35, 37, 39, 41; 135, 137, 139, 141; 235, 237, 239, 241) and which are guided in the guide track (43, 45; 143, 145; 243, 245), the guide track (43, 45, 143, 145; 243, 245) being or an arcuate configuration.

2. An analytical balance according to claim 1 characterised in that when the weighing space (3, 103, 203) is closed at least one side wall (23, 25; 123, 125; 223, 225) bears at the front in linear sealing contact against a front wall (19, 219) and at the rear against a rear wall (17) which closes the weighing space (3, 103, 203) at the rear thereof.

3. An analytical balance according to claim 2 characterised in that when the weighing space (3; 103; 203) is closed the front wall portions (29, 31; 129, 131; 229, 231) bear at the front end against the rear side of the front wall (19, 219) and the rear wall portions 29 , 33; 229, 233) bear with their outside surfaces against a boundary edge (55, 57) of the rear wall (17).

4. An analytical balance according to one of claims 1, 2 and 3 characterised in that formed on the guide frames (35, 37) are an arcuate groove (47) or an arcuate rib (245) and formed on the housing bottom (21, 221) are an arcuate guide track (45; 143, 145) in the form of a rib (45) or a groove (245).

5. An analytical balance according to one of claims 1, 2 and 3 characterised in that at least two guide pins (259) are provided on the guide frame (235, 237) and an arcuate guide track (245) is provided in the housing bottom (221).

6. An analytical balance according to one of claims 1, 2 and 3 characterised in that a rib (159) is provided on the guide frame (135, 137) and a groove (145) with a bottom which is flat, curved or of a V-shaped configuration is let into the housing bottom (121) and that loose balls (175) or a ball cage are fitted in the groove (145).

7. An analytical balance according to one of claims 4 to 6 characterised in that at least one guide roller (177) with a vertical axis of rotation is mounted on the guide frame (141) and is guided in a groove (149) on the cover (113).

8. An analytical balance according to one of claims 1 to 7 characterised in that at least one side wall (23, 25; 123, 125; 223, 225) is made up of rectangular wall portions (27, 29, 31, 33; 227, 229, 231, 233) which are of the same or different configurations and which consist of glass or plastics material.

9. An analytical balance according to claim 8 characterised in that the obtuse angles between the side walls (23, 25; 123, 125; 223, 225) are the same or different.

10. An analytical balance according to one of claims 1 to 9 characterised in that the weighing space (3; 103; 203) is defined at the rear by an intermediate wall (61) which is intended to cover over at least one side wall (23, 25; 123, 125; 223, 225) when it is pushed back, in relation to the weighing space (3; 103; 203).

## Revendications

1. Balance d'analyses comprenant au moins une paroi latérale, qui, pour charger le plateau, peut coulisser le long d'une piste de guidage ménagée dans le boîtier de la balance, et un couvercle qui ferme l'enceinte de pesage dans sa partie supérieure, caractérisée en ce que la paroi latérale, au nombre d'au moins une, (23, 25 ; 123, 125 ; 223, 225) est constituée d'au moins deux parties de paroi au moins sensiblement planes (27, 29, 31, 33 ; 127, 129, 131, 133 ; 227, 229, 231, 233) qui sont contiguës l'une à l'autre au niveau d'un bord (A, B), qui forment ensemble un angle obtus et qui, en bas et en haut, sont maintenues par un cadre de guidage (35, 37, 39, 41 ; 135, 137, 139, 141 ; 235, 237, 239, 241) et guidées dans la piste de guidage (43, 45 ; 143, 145 243, 245), la piste de guidage (43, 45 ; 143, 145 ; 243, 245) ayant la forme d'un arc.

2. Balance d'analyses selon la revendication 1, caractérisée en ce que, lorsque l'enceinte de pesage (3, 103, 203) est fermée, au moins une paroi latérale (23, 25 ; 123, 125 ; 223, 225) est appliquée, à l'avant, de manière linéaire et étanche contre une paroi avant (19, 219) et, à l'arrière, contre une paroi arrière (17) qui ferme l'enceinte de pesage (3, 103, 203) sur sa face arrière.

3. Balance d'analyses selon la revendication 2, caractérisée en ce que, lorsque l'enceinte de pesage (3 ; 103 ; 203) est fermée, les parties de paroi avant (29, 31 ; 129, 131 ; 229, 231) sont appliquées, par leur face frontale, contre la face arrière de la paroi avant (19, 219), et les parties de paroi arrière (29, 33 ; 229, 233) sont appliquées, par leurs faces extérieures, contre un bord de délimitation (55, 57) de la paroi arrière (17).

4. Balance d'analyses selon l'une des revendications 1, 2 et 3, caractérisée en ce que, sur les cadres de guidage (35, 37), est prévue une rainure arquée (47) ou une nervure arquée (245) et, sur le fond (21, 221) du boîtier, est prévue une piste de guidage arquée (45 ; 143, 145) en forme de nervure (45) ou de rainure (245).

5. Balance d'analyses selon l'une des revendications 1, 2 et 3, caractérisée en ce que, sur le cadre de guidage (235, 237) sont prévus au moins deux tourillons de guidage (259) et, dans le fond (221) du boîtier, est prévue une piste de guidage arquée (245).

6. Balance d'analyses selon l'une des revendications 1, 2 et 3, caractérisée en ce que, sur le cadre de guidage (135, 137), est prévue une nervure (159) et, dans le fond (121) du boîtier, est prévue une rainure (145) à fond plat, arqué ou en V, et en ce que des billes libres (175) ou une cage à billes sont logées dans la rainure (145).

7. Balance d'analyses selon l'une des revendications 4 à 6, caractérisée en ce qu'au moins une roulette de guidage (177) à axe de rotation vertical est montée sur le cadre de guidage (141) et guidée dans une rainure (149) du couvercle (113).

8. Balance d'analyses selon l'une des revendications 1 à 7, caractérisée en ce qu'au moins une paroi latérale (23, 25 ; 123, 125 ; 223, 225) est constituée de parties de paroi rectangulaires (27, 29, 31, 33 ; 227, 229, 231, 233) en verre ou en matière plastique qui sont égales ou inégales.

9. Balance d'analyses selon la revendication 8, caractérisée en ce que les angles obtus entre les parois latérales (23, 25 ; 123, 125 ; 223, 225) sont égaux ou inégaux.

10. Balance d'analyses selon l'une des revendications 1 à 9, caractérisée en ce que, sur sa face arrière, l'enceinte de pesage (3 ; 103 ; 203) est limitée par une paroi intermédiaire (61) qui est destinée à masquer au moins une paroi latérale (23, 25 ; 123, 125 ; 223, 225) par rapport à l'enceinte de pesage (3 ; 103 ; 203) lorsque ladite paroi latérale est poussée vers l'arrière.
